# EUROPÄISCHE PATENTSCHRIFT

(11) **EP 4 211 783 B1**
(45) Veröffentlichungstag und Bekanntmachung des Hinweises auf die Patenterteilung: **08.04.2026**
(21) Anmeldenummer: 21773389.8
(22) Anmeldetag: 08.09.2021
(51) Int. Cl.: H02K 41/03, H02K 7/09, F16C 32/04, F16C 29/00

(54) **MAGNETISCHE LAGEREINRICHTUNG UND POSITIONIERSYSTEM**
MAGNETIC BEARING AND POSITIONING SYSTEM
PALIER MAGNÉTIQUE ET SYSTÈME DE POSITIONEMENT

(30) Priorität: 10.09.2020 DE 102020123634
(43) Veröffentlichungstag der Anmeldung: 19.07.2023
(73) Patentinhaber: Physik Instrumente (PI) SE & Co. KG, 76228 Karlsruhe (DE)
(72) Erfinder: GOOS, Alexander, 76228 Karlsruhe (DE); GEISSLER, Daniel, 76228 Karlsruhe (DE)
(74) Vertreter: Grünecker Patent- und Rechtsanwälte PartG mbB
(86) Internationale Anmeldenummer: PCT/EP2021/074649
(87) Internationale Veröffentlichungsnummer: WO 2022/053480

(56) Entgegenhaltungen:
- CN-A- 109 690 099
- US-A1- 2015 211 575
- US-A1- 2020 248 747

## Beschreibung

Die vorliegende Erfindung bezieht sich auf eine magnetische Lagereinrichtung und ein Positioniersystem.

Eine magnetische Lagereinrichtung gemäß dem Oberbegriff des Anspruchs 1 ist aus der Veröffentlichung 1 "Design of Novel Permanent Magnet Biased Linear Magnetic Bearing and it's Application to High-Precision Linear Motion Stage", Sang-Ho Lee et al. und der Veröffentlichung 2 "The High Precision Linear Motion Table With a Novel Rare Earth Permanent Magnet Biased Magnetic Bearing Suspension", Dong-Chul Han et al. bekannt. Weiterer verwandter Stand der Technik ist in der US 2015/211575 A1, CN 109 690 099 A und US 2020/248747 A1 offenbart.

Veröffentlichung 1 beschreibt eine magnetische Lagereinrichtung, welche einen Stator und einen relativ zum Stator entlang einer Bewegungsrichtung bewegbaren Läufer umfasst. Die magnetische Lagereinrichtung ist im Wesentlichen aus Flussleitstücken, Magneten und Spulen zusammengesetzt und so konfiguriert, dass sie bei Beaufschlagung der Spulen mit elektrischer Energie eine magnetische Kraft auf den Läufer ausüben kann, die eine vollständige Kompensation der Gewichtskraft des Läufers ermöglicht und damit als Hubkraft auf den Läufer wirkt. Insbesondere erzeugen die stromdurchflossenen Spulen ein Magnetfeld, das in Wechselwirkung mit dem durch die Magneten erzeugten Magnetfeld steht. Die aktiven Elemente (Spulen) befinden sich im Läufer, was den Nachteil mit sich bringt, dass die zur elektrischen Energieversorgung erforderlichen Kabel am Läufer befestigt und bei einer Bewegung des Läufers relativ zum Stator mitgeführt werden müssen. Alternativ müsste eine drahtlose Energieübertragung bereitgestellt oder Energiespeicherelemente im Läufer angeordnet werden, was zu einer deutlichen Erhöhung des Läufergewichts führen würde. Weiterhin ist bei dieser Konfiguration eine Abführung des elektrisch induzierten Wärmeeintrags nur über die Luft und ggf. über Kabel möglich.

Veröffentlichung 2 beschreibt einen XY-Tisch, welcher ebenfalls einen Teil der Struktur der magnetischen Lagereinrichtung aus Veröffentlichung 1 umfasst. Allerdings sind die aktiven Elemente (Spulen) hier ein Teil des Stators, wodurch die elektrische Energie nicht mehr dem Läufer zugeführt werden muss. Nachteilig sind bei dieser Konfiguration jedoch der deutlich geringere Stellweg und die Veränderung der Kraftangriffspunkte gegenüber dem Läuferkoordinatensystem während der Bewegung des Läufers. Insbesondere sind die Kraftangriffspunkte aufgrund der geometrischen Dimensionen positionsabhängig, wodurch positionsabhängige Hebelarme bezüglich eines Drehmoments entstehen, welches nachteilig für die Regelung eines solchen Systems ist und ebenfalls zu einem positionsabhängigen Leistungsbedarf entlang der Bewegungsrichtung führt.

Daher liegt der Erfindung die Aufgabe zugrunde, eine magnetische Lagereinrichtung gemäß dem Oberbegriff des Anspruchs 1 dahingehend zu verbessern, dass eine einfache und unabhängige Konfiguration des Läufers, eine hinreichend große Abführung des elektrisch induzierten Wärmeeintrags sowie eine positionsunabhängige Regelung über einen längeren Stellweg hinweg erreicht wird.

Zur Lösung dieser Aufgabe stellt die vorliegende Erfindung eine magnetische Lagereinrichtung nach Anspruch 1 bereit.

Die Aufgabe wird dadurch gelöst, dass die Spulenvorrichtung ausschließlich im Stator angeordnet ist und die Erstreckung des Läufers in Bewegungsrichtung kleiner ist als die Erstreckung des Stators in diese Richtung, wobei die Erstreckung des Stators der Länge der Spulenkörper entspricht und die Spulenvorrichtung in einer Richtung senkrecht zur Bewegungsrichtung übereinander angeordnete Spulenkörper aufweist und die Magnete in einer Ebene senkrecht zur Wirkungsrichtung der magnetischen Kraft zwischen den Spulenkörpern angeordnet sind.

Dadurch, dass das aktive Element (d.h. die Spulenvorrichtung bzw. deren Spulenkörper) Teil des Stators ist, muss keine Energie zum Läufer übertragen werden. Der Läufer verkörpert demnach eine völlig passive Baugruppe, welche in ihren Dimensionen und ihrem Gewicht auf ein Minimum reduziert werden kann. Dadurch können benötigte Kräfte für die Beschleunigung und Bewegung reduziert werden oder höhere Beschleunigungen erreicht werden. Insgesamt kann der Leistungseintrag, der erforderlich ist, um den Läufer entlang des Stators zu bewegen, dadurch signifikant reduziert werden. Weiterhin finden entlang der Bewegungsrichtung kaum Ummagnetisierungsvorgänge in den Flussleitstücken statt, wodurch nur sehr geringe Hystereseverluste in den Flussleitstücken entstehen.

Aufgrund der Anordnung der Spulenvorrichtung im Stator erfolgt auch der Wärmeeintrag ausschließlich im Stator. Da zwischen dem Stator als feststehendem Bauteil und einer angrenzenden Struktur, insbesondere einem Gehäuse, eine hohe thermische Kopplung realisierbar ist, kann der Wärmeeintrag effektiv aus dem Stator abgeführt werden.

Die kleinere Erstreckung des Läufers in Bewegungsrichtung im Vergleich zu der des Stators in diese Richtung führt zu einer positionsunabhängigen Hebelarmlänge. Das hat zur Folge, dass der Leistungsbedarf unabhängig von der Position des Läufers ist und aus systemtheoretischer Sicht ein lineareres System entsteht. Zudem ermöglicht dies ein Verschieben des Läufers entlang des Stators mit deutlich geringeren Änderungen bzgl. hervorgerufener Drehmomente. Im Ergebnis ermöglicht die erfindungsgemäße magnetische Lagereinrichtung ein Verschieben des Läufers entlang des Stators ohne bzw. nahezu ohne eine Änderung der Kraft- und Drehmomentkonstanten, ähnlich einer mechanischen Führung.

Dadurch, dass die Spulenvorrichtung in einer Richtung senkrecht zur Bewegungsrichtung übereinander angeordnete Spulenkörper aufweist und die Magnete in einer Ebene senkrecht zur Wirkungsrichtung der magnetischen Kraft zwischen den Spulenkörpern angeordnet sind, können Magnetfelder erzeugt werden, die gezielt miteinander oder gezielt gegeneinander wirken.

Vorteilhafte Weiterbildungen sind Gegenstände der Unteransprüche.

Es kann sich als vorteilhaft erweisen, wenn die Erstreckung des Läufers in Bewegungsrichtung kleiner ist als 3/4, vorzugsweise kleiner als 1/2, bevorzugt kleiner als 1/3, besonders bevorzugt kleiner oder gleich 1/4, der Erstreckung des Stators in dieser Richtung. Die oben beschriebenen Vorteile können mit zunehmender Verkleinerung des Erstreckungsverhältnisses von Läufer zu Stator verstärkt werden. Durch Anpassen des Erstreckungsverhältnisses können außerdem verschiedene Bauraumanforderungen erfüllt werden.

Es kann von Nutzen sein, wenn der Läufer mindestens zwei Flussleitstücke umfasst, welche auf gegenüberliegenden Seiten des Stators angeordnet sind und durch ein zumindest teilweises nichtmagnetisches Element miteinander verbunden sind. Durch diese Konfiguration umgreift der Läufer den Stator in möglichst kompakter Bauform. Vorzugsweise ist das Verbindungselement aus einem nichtmagnetisierbaren Material, damit eine kompakte Bauform realisiert werden kann. Falls eine kompakte Bauform nicht entscheidend ist, kann es von Vorteil sein, für das Verbindungselement ein magnetisierbares Material zu verwenden, jedoch unter der Bedingung, dass ein genügend großer Abstand zum Stator besteht, damit der Fluss in dem zwischenliegenden Luftspalt gering gehalten wird und somit keine bzw. nur geringe Anziehungskräfte resultieren. Hierbei ist denkbar, dasjenige flussleitende Seitenteil des Stators, welches näher an dem Verbindungselement liegt, in einer "E-Form" auszuführen und darin eine weitere Spule einzusetzen. Damit wäre es möglich, bei einem kleinen Luftspalt gegenüber dem aus einem magnetisierbaren Material bestehenden Verbindungselement, eine seitliche Kraft zu erzeugen.

Es kann auch nützlich sein, wenn sich jeder Spulenkörper der Spulenvorrichtung in einer eigenen Ebene (xy) erstreckt, wobei vorzugsweise die Länge der Magnete und Flussleitstücke des Stators in Bewegungsrichtung der Länge der parallel verlaufenden Abschnitte jedes Spulenkörpers entspricht. Durch die gleiche Länge der Magnete, Flussleitstücke und parallel verlaufender Abschnitte der Spulenkörper kann ein homogener Bereich erzeugt werden, der eine hohe Gleichförmigkeit in Bezug auf die Bewegung des Läufers ermöglicht.

Es kann von Vorteil sein, wenn die Magnete im Stator jeweils zwischen zwei Flussleitstücken angeordnet sind. Durch diese Anordnung wird eine Entmagnetisierung der Magnete durch das von der Spulenvorrichtung hervorgerufene Magnetfeld verhindert.

Es kann vorteilhaft sein, wenn jeder Spulenkörper eine Öffnung aufweist und ein Flussleitstück in der Öffnung jedes Spulenkörpers angeordnet ist.

Es kann nützlich sein, wenn jeder Spulenkörper zwischen zwei parallel verlaufenden und sich vorzugsweise in Bewegungsrichtung erstreckenden Flussleitstücken angeordnet ist, und vorzugsweise wenigstens eines dieser Flussleitstücke einen Kopplungsabschnitt aufweist, an dem es an eine weitere Struktur, vorzugsweise an ein Gehäuse, gekoppelt werden kann. In dieser Konfiguration übernimmt das Flussleitstück nicht nur die Leitung des magnetischen Flusses, sondern dient auch als Strukturbauteil zur Anbindung des Stators an ein Gehäuse.

Es kann auch sinnvoll sein, wenn der Stator ein zentrales Flussleitstück mit kreuzförmigem Querschnitt aufweist und gegenüberliegende Abschnitte des zentralen Flussleitstücks in den Öffnungen von verschiedenen Spulenkörpern angeordnet sind. Diese Konfiguration ermöglicht eine zielgerichtete Leitung des magnetischen Flusses bei kompakter Bauform. Es sind jedoch auch andere Querschnitte für das zentrale Flussleitstück denkbar, etwa solche mit einer plattenförmigen Geometrie. Eine entsprechende Querschnittsgeometrie hat den Vorteil deutlich reduzierter Herstellkosten für das Flussleitstück.

Es kann von Nutzen sein, wenn die Magnete und/oder die Flussleitstücke einstückig oder gestückelt ausgebildet sind.

Es kann praktisch sein, wenn die magnetische Lagereinrichtung eine magnetische Führung umfasst, die konfiguriert ist, den Läufer in einer Ebene senkrecht zur magnetischen Kraft und in einer

Richtung senkrecht zur Bewegungsrichtung zu bewegen. Durch die Erzeugung einer magnetischen Seitenkraft, die in der Ebene senkrecht zur Wirkungsrichtung der magnetischen Hubkraft und in einer Richtung senkrecht zur Bewegungsrichtung wirkt, kann eine Positionierung des Läufers in diese Richtung ermöglicht werden.

Es kann sinnvoll sein, wenn die magnetische Führung einen Führungsläufer umfasst, der mit dem Läufer, vorzugsweise über ein nichtmagnetisches Material, verbunden ist. Damit kann eine Baugruppe geschaffen werden, auf die sowohl die magnetische Hubkraft als auch die magnetische Seitenkraft wirkt.

Es kann von Vorteil sein, wenn die magnetische Führung eine Spulenvorrichtung mit einem Spulenkörperpaar aufweist, das sich in einer Ebene erstreckt, wobei der Stator und der Läufer in einer Richtung senkrecht zu dieser Ebene über dem Spulenkörperpaar angeordnet sind und der Führungsläufer zwischen dem Läufer und dem Spulenkörperpaar angeordnet ist, wobei der Führungsläufer Permanentmagnete aufweist, welche vorzugsweise in Konfiguration eines Halbach-Arrays angeordnet sind. Die Spulenvorrichtung der magnetischen Führung weist mehrere Spulenkörper auf.

Für den Führungsläufer sind auch Konfigurationen der Permanentmagnete möglich, die von der Halbach-Array-Anordnung abweichen.

Darüber hinaus umfasst die vorliegende Erfindung ein Positioniersystem, umfassend wenigstens eine magnetische Lagereinrichtung nach einer der vorangehenden Ausführungsformen, ein Gehäuse und eine Plattform, wobei der Stator mit dem Gehäuse gekoppelt ist und die Plattform mit dem Läufer gekoppelt ist. Mit einem derartigen Positioniersystem ist es möglich, die Plattform relativ zum Stator ohne Reibungsverluste zu positionieren.

Es kann vorteilhaft sein, wenn das Positioniersystem weiter einen Linearmotor umfasst, der konfiguriert ist, die Plattform relativ zum Gehäuse in Bewegungsrichtung zu bewegen. Über die Wahl der Ansteuerparameter des Linearmotors sowie der magnetischen Lagereinrichtung kann eine hochpräzise Positionierung der Plattform erreicht werden.

Es kann von Vorteil sein, wenn das Positioniersystem wenigstens eine Elektronikkomponente mit zumindest einem Sensor, vorzugsweise in Form einer Sensorplatine, beinhaltet. Es ist denkbar, dass das Positioniersystem weitere Elektronikkomponenten umfasst, beispielsweise einen Motortreiber, einen Motorcontroller und logische digitale Bausteine. Dabei kann es vorteilhaft sein, dass zwei oder mehr Elektronikkomponenten auf einer gemeinsamen Platine bzw. Leiterplatte angeordnet sind. Diese Maßnahme ermöglicht eine Reduzierung des Leistungseintrags, da keine Verlustleistungen über ansonsten notwendige Zuleitungen bzw. Kabel entstehen. Zudem gelingt durch räumliche Integration der Elektronikkomponente/n eine sehr kompakte Bauweise des Positioniersystems, so dass etwa auf einen externen Controller verzichtet werden kann.

### Begriffe und Definitionen

Der Begriff "Spulenvorrichtung" umfasst im einfachsten Fall einen Spulenkörper, dessen Windungen konzentrisch und in einer gemeinsamen Ebene verlaufend angeordnet sind. Er umfasst daneben auch einen Spulenkörper, dessen konzentrische Windungen sich in mehreren unterschiedlichen Ebenen erstrecken. Hierbei können die Windungen eines Spulenkörpers in ein Material, etwa ein Epoxidharz, eingebettet sein. Es ist denkbar, einzelne Spulenkörper der Spulenvorrichtung elektrisch parallel oder seriell miteinander zu verbinden bzw. zu koppeln.

Der Begriff "nichtmagnetisch" beschreibt sowohl nichtmagnetisierbare als auch sehr schwach bzw. nicht dauerhaft magnetisierbare Materialien, und schließt insbesondere Materialien mit permanentmagnetischen bzw. ferromagnetischen Eigenschaften aus. Unter nichtmagnetisierbare Materialien fällt zum Beispiel Aluminium, während unter den Begriff "magnetisierbare Materialen" ferro- oder paramagnetische Materialien wie etwa Eisen oder Alkalimetalle fallen.

### Kurze Beschreibung der Figuren

Fig. 1 zeigt eine perspektivische Darstellung einer Ausführungsform der erfindungsgemäßen magnetischen Lagereinrichtung.
Fig. 2 zeigt eine geschnittene perspektivische Darstellung der Ausführungsform gemäß Fig. 1.
Fig. 3 zeigt eine perspektivische Darstellung einer Weiterbildung der Ausführungsform der magnetischen Lagereinrichtung gemäß Figur 1, die eine magnetische Führung in Form eines nebeneinander angeordneten Spulenkörperpaars und eines Führungsläufers umfasst.
Fig. 4 zeigt eine geschnittene perspektivische Darstellung der Ausführungsform gemäß Fig. 3.
Fig. 5 zeigt eine Schnittansicht der Ausführungsform gemäß Fig. 4.
Fig. 6 zeigt eine perspektivische Darstellung eines erfindungsgemäßen Positioniersystems.
Fig. 7 zeigt das Positioniersystem gemäß Fig. 6, wobei die Plattform zum Zweck der Veranschaulichung nicht abgebildet ist.
Fig. 8 zeigt eine Rückansicht des Positioniersystems gemäß Fig. 6, wobei zum Zweck der Veranschaulichung das Gehäuse sowie die Statoren nicht abgebildet sind.

### Detaillierte Beschreibung der bevorzugten Ausführungsbeispiele

Bevorzugte Ausführungsbeispiele der vorliegenden Erfindung werden nachstehend mit Bezug auf die angehängten Figuren im Detail beschrieben.

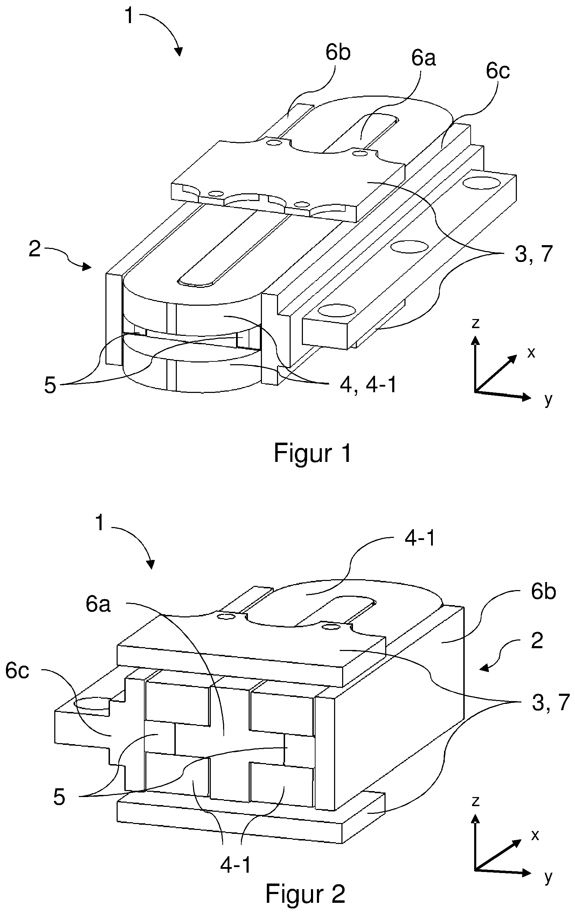

Fig. 1 zeigt eine Ausführungsform der erfindungsgemäßen magnetischen Lagereinrichtung 1 in perspektivischer Ansicht. Die magnetische Lagereinrichtung 1 umfasst einen Stator 2 und einen Läufer 3.

Der Stator 2 beinhaltet eine Spulenvorrichtung 4 mit zwei separaten und elektrisch nicht miteinander verbundenen Spulenkörpern 4-1, die in z-Richtung übereinander und folglich in parallelen x-y-Ebenen angeordnet sind. Die Länge der Spulenkörper 4-1 erstreckt sich in x-Richtung. Der Stator 2 umfasst weiterhin drei Flussleitstücke 6a, 6b, 6c aus einem magnetisierbaren Stahl und vier Magnete 5 (in den Figuren sind nur zwei davon zu sehen), deren Längen sich ebenfalls in x-Richtung erstrecken. Aus Fig. 2 wird ersichtlich, dass zwei Flussleitstücke 6b, 6c als äußere Flussleitstücke 6b, 6c die Spulenkörper 4-1 so flankieren, dass sich diese in y-Richtung zwischen den beiden äußeren Flussleitstücken 6b, 6c befinden. Das dritte Flussleitstück 6a ist als zentrales Flussleitstück 6a in y-Richtung zwischen den äußeren Flussleitstücken 6b, 6c und in z-Richtung zwischen den Spulenkörpern 4-1 angeordnet. In der vorliegenden Ausführungsform weist das zentrale Flussleitstück 6a einen kreuzförmigen Querschnitt auf und ragt somit mit gegenüberliegenden Abschnitten in die Öffnungen der Spulenkörper 4-1. Eines der äußeren Flussleistücke 6c ist zudem mit einem Kopplungsabschnitt versehen, der sich entlang des Flussleitstücks 6c in x-Richtung erstreckt und eine Anbindung an eine weitere Struktur, insbesondere an ein Gehäuse, ermöglicht. Die zwei Magnete 5 sind in y-Richtung jeweils zwischen einem äußeren Flussleitstück 6b, 6c und dem zentralen Flussleitstück 6a und in z-Richtung zwischen den Spulenkörpern 4-1 angeordnet. Die Höhe der Flussleitstücke 6a, 6b, 6c in z-Richtung ist so gewählt, dass die Flussleitstücke 6a, 6b, 6c bündig mit der oberen bzw. unteren Endfläche der Spulenkörper 4-1 abschließen. Damit werden zwei im Wesentlichen ebene Hauptoberflächen des Stators 2 gebildet. Abweichungen von dem bündigen Abschließen der Flussleitstücke 6a, 6b, 6c mit der oberen bzw. unteren Endfläche der Spulenkörper 4-1 sind möglich, wobei für bestimmte Anwendungsfälle gerade ein deutliches Überragen der Flussleitstücke 6a, 6b, 6c über die Endflächen der Spulenkörper 4-1 vorteilhaft ist, etwa bei Vakuumanwendungen, um dadurch den magnetischen Fluss quasi durch eine Schleuse zu leiten, wobei ein magnetischer Rückschluss innerhalb des Vakuums stattfindet, während Spulenkörper 4-1 und Magnete 5 außerhalb des Vakuums angeordnet sind. Bei einem Unterragen der Flussleitstücke 6a, 6b, 6c bezüglich der Endflächen der Spulenkörper 4-1 kann etwa eine E-Form hinsichtlich des Rückschlusses gewählt werden. Denkbar ist zudem, dass nur einzelne der Flussleitstücke 6a, 6b, 6c mit den Endflächen der Spulenkörper 4-1 abschließen, und der Rückschluss entsprechend komplementär geformt ist.

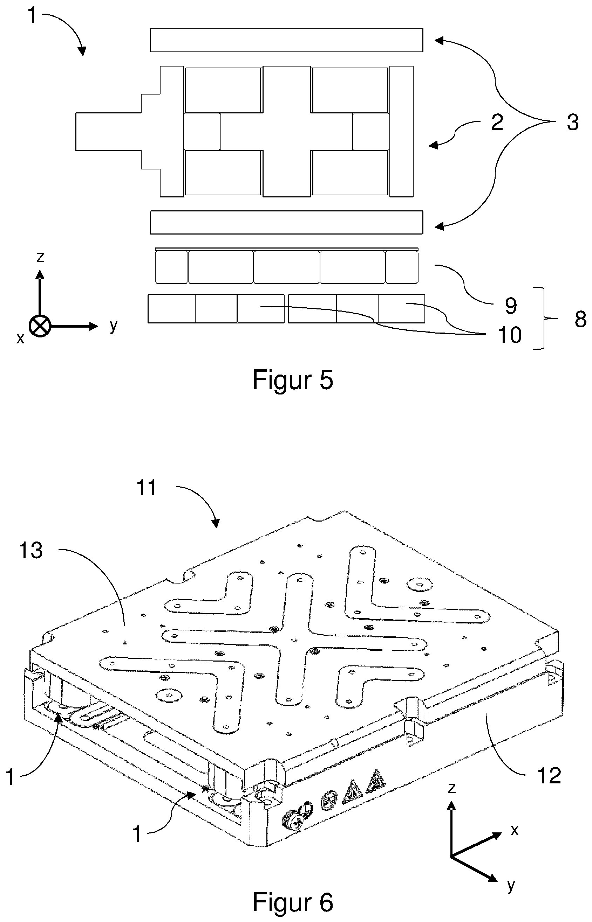

Der Läufer 3 umfasst zwei vorzugsweise identische Flussleitstücke 7, die auf gegenüberliegenden Seiten des Stators 2 angeordnet sind, und ein zumindest teilweise nicht-magnetisches Element, das die beiden Flussleitstücke 7 miteinander verbindet (nicht abgebildet). Der Läufer 3 ist demnach so ausgebildet, dass er den Stator 2 umgreift. Die Flussleitstücke 7 können ebenfalls Kopplungsabschnitte aufweisen, die eine Anbindung an eine weitere Struktur, insbesondere eine Plattform, ermöglichen. Die Flussleitstücke 7 überragen in y-Richtung gesehen den Stator 2 (siehe hierzu insbesondere Fig. 5), wodurch nur geringe Rückstellkräfte in y-Richtung resultieren und ein verringerter Leistungseintrag in die magnetische Lagereinrichtung zur Erzeugung einer Bewegung entlang der y-Richtung ermöglicht wird. Weiterhin können die Flussleitstücke 7 eine besondere Form, beispielsweise eine "E-Form" aufweisen, um translatorische Rückstellkräfte in y-Richtung und rotatorische Rückstellkräfte um die z-Achse zu erhalten. Die Länge des Läufers 3 in x-Richtung ist deutlich geringer als die Länge des Stators 2 in dieser Richtung. In der vorliegenden Ausführungsform beträgt die Länge des Läufers in x-Richtung 1/4 der Länge des Stators in dieser Richtung. Das Längenverhältnis von Läufer 3 zu Stator 2 in x-Richtung ist jedoch nicht auf diesen Wert beschränkt, sondern kann beliebige Werte aufweisen, die vorzugsweise kleiner als 3/4 sind.

Im Allgemeinen sind die Flussleitstücke 6a, 6b, 6c, 7 des Stators 2 und des Läufers 3 sowie die Magnete 5 des Stators 2 nicht auf die in den Figuren abgebildeten Formen beschränkt, sondern können jede zweckmäßige Form aufweisen, insbesondere auch Formen, die die Integration des Stators 2 und des Läufers 3 in übergeordnete Strukturen (z. B. Gehäuse und Plattform) vereinfachen. Weiterhin können die Flussleitstücke 6a, 6b, 6c, 7 und Magnete 5 sowohl einstückig als auch gestückelt ausgebildet sein. Insbesondere ist bei den Flussleitstücken 6a, 6b, 6c und 7 denkbar, diese in Schichtbauweise bzw. als Laminat auszuführen, wobei sich Schichten magnetisierbaren Materials und Schichten mit elektrisch nichtleitendem Material abwechseln. Bei den Spulenkörpern 4-1 handelt es sich vorzugsweise um Drahtspulen. Daneben ist es jedoch auch möglich, Folienspulen oder gedruckte Spulen einzusetzen.

Durch Beaufschlagung der Spulenkörper 4-1 mit elektrischer Energie kann die magnetische Lagereinrichtung 1 angesteuert werden. Die stromdurchflossenen Spulenkörper 4-1 erzeugen Magnetfelder in den Flussleitstücken 6a, 6b, 6c, 7, die in Wechselwirkung mit dem durch die Magnete 5 erzeugten Magnetfeld stehen. Insbesondere können diese Magnetfelder miteinander oder gegeneinander wirken. Wirkt das Magnetfeld des oberen Spulenkörpers 4-1 dem Magnetfeld der Magnete 5 im oberen Teil der Flussleitstücke 6a, 6b, 6c, 7 entgegen, so kann das Magnetfeld des unteren Spulenkörpers 4-1 das Magnetfeld der Magnete 5 im unteren Teil der Flussleitstücke 6a, 6b, 6c, 7 durch die richtige Wahl der Ansteuerparameter (Stromrichtung) verstärken.

Durch eine geeignete Wahl der Ansteuerparameter kann damit eine magnetische Kraft (Hubkraft) auf den Läufer 3 ausgeübt werden, die zur Ausbildung eines Luftspalts zwischen dem oberen Flussleitstück 7 des Läufers 3 und der oberen Hauptoberfläche des Stators 2 sowie zwischen dem unteren Flussleitstück 7 des Läufers 3 und der unteren Hauptoberfläche des Stators 2 führt. Insbesondere ist die Größe des Luftspalts, d.h. der Abstand zwischen den Hauptoberflächen des Stators 2 und den Flussleitstücken 7 des Läufers 3 in z-Richtung durch die Anpassung der Ansteuerparameter einstellbar. Diese als Hubkraft wirkende magnetische Kraft ist somit in der Lage, die Gewichtskraft des Läufers 3 zu kompensieren. Bei gleichzeitiger Stabilisierung des Läufers 3 bezüglich seiner Rotationsfreiheitsgrade um die X- und Y-Achse schwebt der Läufer 3 und kann relativ zum Stator 2 entlang der x-Richtung reibungsfrei verschoben werden.

Der Stellweg des Läufers 3 wird im Wesentlichen durch die Länge der Flussleitstücke 6a, 6b, 6c und der Magnete 5 des Stators 2 bestimmt. Durch das oben beschriebene Längenverhältnis von Läufer 3 zu Stator 2 in x-Richtung können entsprechend große Stellwege realisiert werden. Weiterhin besteht die Möglichkeit, mehrere Statoren 2 entlang der x-Richtung in Reihe zu schalten und geeignet anzusteuern, um den Stellweg des Läufers 3 im Sinne eines fortlaufenden Systems weiter zu vergrößern.

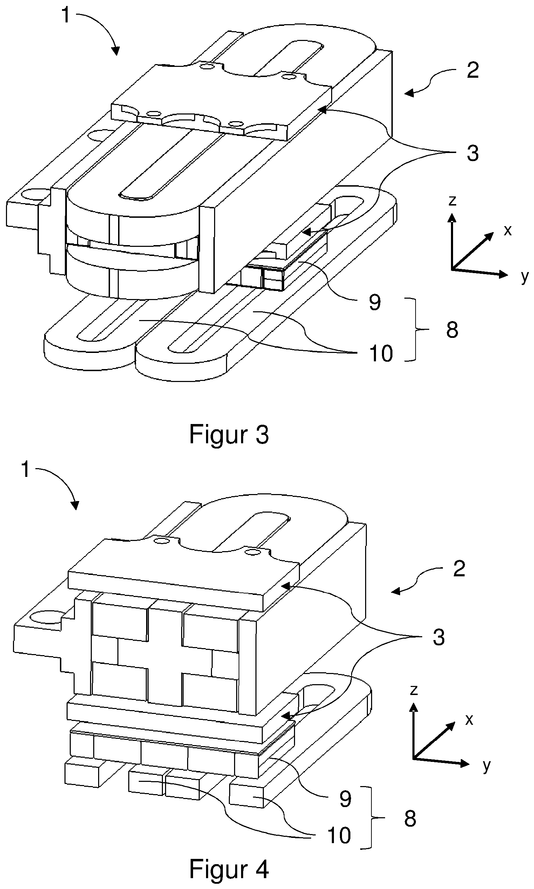

Die Fig. 3 bis 5 zeigen einer Weiterbildung der magnetischen Lagereinrichtung 1 gemäß der oben beschriebenen Ausführungsform. Diese Weiterbildung umfasst zusätzlich eine magnetische Führung 8, die konfiguriert ist, den Läufer 3 in y-Richtung zu bewegen. Insbesondere wird mithilfe der magnetischen Führung 8 eine magnetische Kraft (Seitenkraft) erzeugt, die den Läufer in y-Richtung bewegt. Damit ist die Position des Läufers 3 in y-Richtung einstellbar. Die magnetische Führung 8 umfasst eine Spulenvorrichtung mit einem Spulenkörperpaar 10, welches in einer gemeinsamen x-y-Ebene unterhalb der Läufer-Stator-Gruppe angeordnet ist, sowie einen Führungsläufer 9, der in z-Richtung zwischen dem Spulenkörperpaar 10 und der Läufer-Stator-Gruppe angeordnet ist. Dabei ist der Führungsläufer 9 mit dem Läufer 3 über ein den Figuren nicht entnehmbares Verbindungselement aus Aluminium verbunden. Das Verbindungselement kann jedoch aus einem beliebigen anderen Material hergestellt sein. Wenn etwa eine magnetische Kopplung gewünscht ist, um zum Beispiel den Fluss in dem unteren Flussleitstück 7 zu verstärken, so kann es vorteilhaft sein, das Verbindungselement mit einem magnetisierbaren Material auszuführen. Das Verstärken des Flusses im unteren Flussleitstück 7 kann vorteilhaft sein, damit eine asymmetrische Kraftkennlinie bzw. ein Offset in der Kraftkennlinie für die magnetische Lagereinrichtung 1 entsteht und somit ein Teil der Gewichtskraft kompensiert wird. In der vorliegenden Ausführungsform ist diese Verbindung bevorzugt zwischen einander zugewandten Oberflächen des Führungsläufers 9 und des unteren Flussleitstücks 7 des Läufers 3 ausgebildet. Weiterhin umfasst der Führungsläufer 9 Permanentmagneten, die in einer Halbach-Array-Konfiguration angeordnet sind, wobei auch andere Anordnungen der Permanentmagnete zueinander denkbar sind. Je nach Anwendungsfall kann der Führungsläufer 9 mit dem Läufer 3 magnetisch gekoppelt oder von diesem magnetisch entkoppelt sein.

Die Fig. 6 bis 8 zeigen ein Positioniersystem 11, welches vier magnetische Lagereinrichtungen 1 nach der oben beschriebenen Ausführungsform, vier magnetische Führungen 8, ein Gehäuse 12, eine Plattform 13 sowie einen Linearmotor 14 umfasst. Es ist jedoch denkbar, statt magnetischen Führungen mechanische Führungen oder Luftlager zu verwenden. Das Gehäuse 12 ist als rechteckige Platte ausgebildet, wobei die Platte an zwei gegenüberliegenden Seiten mit einer Seitenwand versehen ist. Zwei magnetische Lagereinrichtungen 1 sind entlang jeder Seitenwand hintereinander angeordnet. Eines der äußeren Flussleitstücke 6c des Stators 3 von jeder magnetischen Lagereinrichtung 1 ist dabei mithilfe seines Kopplungsabschnitts an der entsprechenden Seitenwand befestigt. In der Mitte der Platte ist der Stator-Teil (Spulenvorrichtung) eines Linearmotors 14 angeordnet.

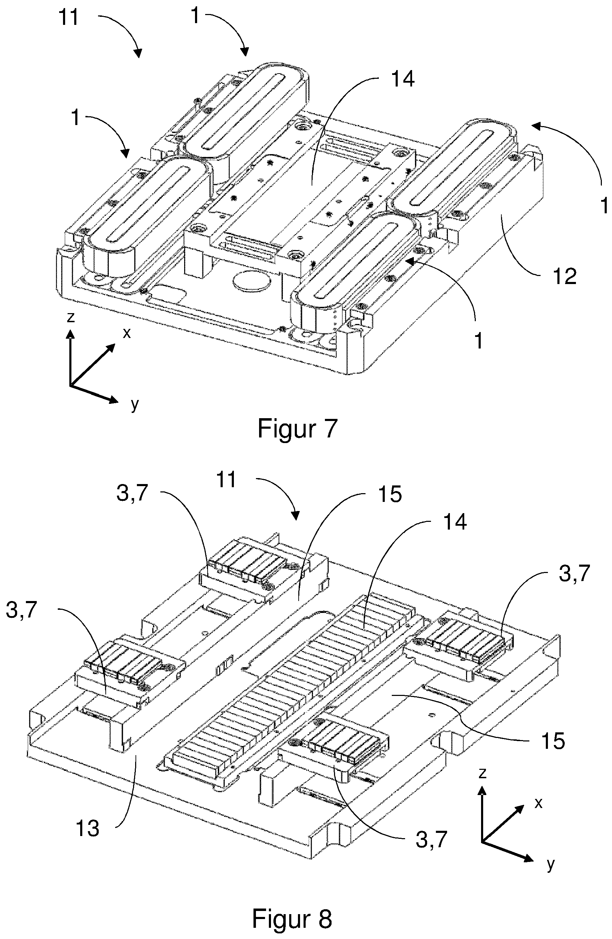

Die Plattform 13 ist mit jedem Läufer 3 der vier magnetischen Lagereinrichtungen 1 gekoppelt. Wie Fig. 8 zeigt, ist die Plattform 13 dabei sowohl mit dem unteren Flussleitstück 7 als auch mit dem oberen Flussleitstück 7 eines jeden Läufers 3 gekoppelt. Die Kopplung mit den oberen Flussleitstücken erfolgt über Ausnehmungen in der Plattformfläche. Die Kopplung mit den unteren Flussleitstücken 7 erfolgt über zwei Verbindungsstege 15, die auf der Unterseite der Plattform 13 angeordnet sind. Jeder Verbindungssteg 15 verbindet die Plattform 13 mit den unteren Flussleitstücken 7 von zwei hintereinander angeordneten Läufern 3. Weiterhin ist in der Mitte der Plattform 13 der Läufer-Teil (Permanentmagnete) des Linearmotors 14 angeordnet.

Mit dem oben beschriebenen Positioniersystem 11 kann eine 6D Positionierung der Plattform 13 ohne Reibungsverluste realisiert werden. Weiterhin kann über die Wahl der entsprechenden Ansteuerparameter eine hochpräzise Positionierung der Plattform 13 erreicht werden.

Die Anzahl der magnetischen Lagereinrichtungen 1 im Positioniersystem 11 ist nicht auf vier beschränkt und kann je nach Anwendungsfall bzw. Einbausituation angepasst werden. Im einfachsten Fall ist es ausreichend, wenn das Positioniersystem 11 eine magnetische Lagereinrichtung 1 umfasst.

### Bezugszeichenliste

- 1: magnetische Lagereinrichtung
- 2: Stator
- 3: Läufer
- 4: Spulenvorrichtung
- 4-1: Spulenkörper
- 5: Magnet
- 6, 6a, 6b, 6c: Flussleitstück des Stators
- 7: Flussleitstück des Läufers
- 8: magnetische Führung
- 9: Führungsläufer
- 10: Spulenkörperpaar der magnetischen Führung
- 11: Positioniersystem
- 12: Gehäuse
- 13: Plattform
- 14: Linearmotor
- 15: Verbindungssteg

## Patentansprüche

1. Magnetische Lagereinrichtung (1), umfassend einen Stator (2) und einen Läufer (3), die aus wenigstens einer Spulenvorrichtung (4) mit mehreren Spulenkörpern (4-1), Magneten (5) und/oder Flussleitstücken (6a-6c, 7) gebildet sind, wobei der Läufer (3) relativ zum Stator (2) entlang zumindest einer linearen Bewegungsrichtung (x) bewegbar ist und Stator (2) und Läufer (3) so konfiguriert sind, dass bei Beaufschlagung der Spulenvorrichtung (4) mit elektrischer Energie eine magnetische Kraft auf den Läufer (3) ausgeübt werden kann, um einen Luftspalt zwischen Stator (2) und Läufer (3) auszubilden, wobei die Spulenvorrichtung (4) ausschließlich im Stator (2) angeordnet ist und die Erstreckung des Läufers (3) in Bewegungsrichtung (x) kleiner ist als die Erstreckung des Stators (2) in diese Richtung, wobei die Erstreckung des Stators (2) in Bewegungsrichtung (x) der Länge der Spulenkörper (4-1) entspricht, wobei die Spulenvorrichtung (4) in einer Richtung senkrecht zur Bewegungsrichtung (x) übereinander angeordnete Spulenkörper (4-1) aufweist, **dadurch gekennzeichnet, dass** der Stator die Magnete (5) aufweist, wobei die Magnete (5) in einer Ebene (xy) senkrecht zur Wirkungsrichtung der magnetischen Kraft zwischen den Spulenkörpern (4-1) angeordnet sind.

2. Magnetische Lagereinrichtung nach Anspruch 1, **dadurch gekennzeichnet, dass** die Erstreckung des Läufers (3) in Bewegungsrichtung (x) kleiner ist als 3/4, vorzugsweise kleiner als 1/2, bevorzugt kleiner als 1/3, besonders bevorzugt kleiner oder gleich 1/4, der Erstreckung des Stators (2) in dieser Richtung.

3. Magnetische Lagereinrichtung nach Anspruch 1 oder 2, **dadurch gekennzeichnet, dass** der Läufer (3) mindestens zwei Flussleitstücke (7) umfasst, welche auf gegenüberliegenden Seiten des Stators (2) angeordnet sind und durch ein zumindest teilweises nichtmagnetisches Element miteinander verbunden sind.

4. Magnetische Lagereinrichtung nach einem der vorangehenden Ansprüche, **dadurch gekennzeichnet, dass** sich jeder Spulenkörper (4-1) in einer eigenen Ebene (xy) erstreckt, wobei vorzugsweise die Länge der Magnete (5) und Flussleitstücke (6) des Stators in Bewegungsrichtung (x) der Länge der parallel verlaufenden Abschnitte jedes Spulenkörpers (4-1) entspricht.

5. Magnetische Lagereinrichtung nach einem der vorangehenden Ansprüche, **dadurch gekennzeichnet, dass** die Magnete (5) im Stator (2) jeweils zwischen zwei Flussleitstücken (6a-6c) angeordnet sind.

6. Magnetische Lagereinrichtung nach einem der vorangehenden Ansprüche, **dadurch gekennzeichnet, dass** jeder Spulenkörper (4-1) eine Öffnung aufweist und ein Flussleitstück (6a) in der Öffnung jedes Spulenkörpers (4-1) angeordnet ist.

7. Magnetische Lagereinrichtung nach einem der vorangehenden Ansprüche, **dadurch gekennzeichnet, dass** jeder Spulenkörper (4-1) zwischen zwei parallel verlaufenden Flussleitstücken (6b, 6c) angeordnet ist, die sich vorzugsweise in Bewegungsrichtung (x) erstrecken, und vorzugsweise wenigstens eines dieser Flussleitstücke (6c) einen Kopplungsabschnitt aufweist, an dem es an eine weitere Struktur, vorzugsweise an ein Gehäuse (12), gekoppelt werden kann.

8. Magnetische Lagereinrichtung nach einem der vorangehenden Ansprüche, **dadurch gekennzeichnet, dass** der Stator (2) ein zentrales Flussleitstück (6a) mit kreuzförmigem Querschnitt in einer Ebene senkrecht zur Bewegungsrichtung (x) aufweist und gegenüberliegende Abschnitte des zentralen Flussleitstücks (6a) in den Öffnungen von verschiedenen Spulenkörpern (4-1) angeordnet sind.

9. Magnetische Lagereinrichtung nach einem der vorangehenden Ansprüche, **dadurch gekennzeichnet, dass** die Magnete (5) und/oder die Flussleitstücke (6a-6c, 7) einstückig oder gestückelt ausgebildet sind.

10. Magnetische Lagereinrichtung nach einem der vorangehenden Ansprüche, **dadurch gekennzeichnet, dass** die magnetische Lagereinrichtung (1) eine magnetische Führung (8) umfasst, die konfiguriert ist, den Läufer (3) in einer Ebene (xy) senkrecht zur magnetischen Kraft und in einer Richtung (y) senkrecht zur Bewegungsrichtung (x) zu bewegen.

11. Magnetische Lagereinrichtung nach Anspruch 10, **dadurch gekennzeichnet, dass** die magnetische Führung (8) einen Führungsläufer (9) umfasst, der mit dem Läufer (3), vorzugsweise über ein nichtmagnetisches Material verbunden ist.

12. Magnetische Lagereinrichtung nach Anspruch 11, **dadurch gekennzeichnet, dass** die magnetische Führung (8) eine Spulenvorrichtung mit einem Spulenkörperpaar (10) aufweist, das sich in einer Ebene (xy) erstreckt, wobei der Stator (2) und der Läufer (3) in einer Richtung (z) senkrecht zu dieser Ebene (xy) über dem Spulenkörperpaar (10) angeordnet sind und der Führungsläufer (9) zwischen dem Läufer (3) und dem Spulenkörperpaar (10) angeordnet ist, wobei der Führungsläufer (9) Permanentmagnete aufweist, welche vorzugsweise in Konfiguration eines Halbach-Arrays angeordnet sind.

13. Positioniersystem (11), umfassend wenigstens eine magnetische Lagereinrichtung (1) nach einem der Ansprüche 1 bis 12, ein Gehäuse (12) und eine Plattform (13), wobei der Stator (2) mit dem Gehäuse (12) gekoppelt ist und die Plattform (13) mit dem Läufer (3) gekoppelt ist.

14. Positioniersystem nach Anspruch 13, weiter umfassend einen Linearmotor (14), der konfiguriert ist, die Plattform (13) relativ zum Gehäuse (12) in Bewegungsrichtung (x) zu bewegen.

## Claims

1. Magnetic bearing device (1) comprising a stator (2) and a moving member (3) which are formed from at least one coil device (4) with a plurality of coil bodies (4-1), magnets (5), and/or flux guide members (6a-6c, 7), where said moving member (3) is movable relative to said stator (2) along a linear direction of motion (x) and said stator (2) and said moving member (3) are configured such that a magnetic force can be exerted upon said moving member (3) when electrical energy is applied to said coil device (4) in order to form an air gap between said stator (2) and said moving member (3), wherein said coil device (4) is arranged exclusively in said stator (2) and the extension of said moving member (3) in said direction of motion (x) is smaller than the extension of said stator (2) in this direction, where the extension of said stator (2) in said direction of motion (x) corresponds to the length of the coil bodies (4-1), wherein said coil device (4) comprises coil bodies (4-1) arranged one above the other in a direction orthogonal to said direction of motion (x), **characterized in that** said stator comprises said magnets (5), wherein said magnets (5) are arranged in a plane (xy) orthogonal to the direction of action of the magnetic force between the coil bodies (4-1).

2. Magnetic bearing device according to claim 1, **characterized in that** the extension of said moving member (3) in said direction of motion (x) is smaller than 3/4, preferably smaller than 1/2, preferably smaller than 1/3, particularly preferably smaller than or equal to 1/4, of the extension of said stator (2) in this direction.

3. Magnetic bearing device according to claim 1 or 2, **characterized in that** said moving member (3) comprises at least two flux guide members (7) which are arranged on oppositely disposed sides of said stator (2) and are connected to one another by an element that is non-magnetic at least in part.

4. Magnetic bearing device according to one of the preceding claims, **characterized in that** each coil body (4-1) extends in its own plane (xy), where the length of said magnets (5) and flux guide members (6) of said stator in said direction of motion (x) preferably corresponds to the length of the sections of each coil body (4-1) extending in parallel.

5. Magnetic bearing device according to one of the preceding claims, **characterized in that** said magnets (5) in said stator (2) are each arranged between two flux guide members (6a-6c).

6. Magnetic bearing device according to one of the preceding claims, **characterized in that** each coil body (4-1) comprises an opening and a flux guide member (6a) is arranged in said opening of each coil body (4-1).

7. Magnetic bearing device according to one of the preceding claims, **characterized in that** each coil body (4-1) is arranged between two flux guide members (6b, 6c) that extend in parallel and that preferably extend in said direction of motion (x), and preferably at least one of said flux guide members (6c) comprises a coupling section at which it can be coupled to a further structure, preferably to a casing (12).

8. Magnetic bearing device according to one of the preceding claims, **characterized in that** said stator (2) comprises a central flux guide member (6a) with a cross-shaped cross section in a plane perpendicular to said direction of motion (x) and oppositely disposed sections of said central flux guide member (6a) are arranged in the openings of different coil bodies (4-1).

9. Magnetic bearing device according to one of the preceding claims, **characterized in that** said magnets (5) and/or said flux guide members (6a-6c, 7) are formed integrally or in pieces.

10. Magnetic bearing device according to one of the preceding claims, **characterized in that** said magnetic bearing device (1) comprises a magnetic guide (8) which is configured to move said moving member (3) in a plane (xy) perpendicular to the magnetic force and in a direction (y) perpendicular to said direction of motion (x).

11. Magnetic bearing device according to claim 10, **characterized in that** said magnetic guide (8) comprises a guide moving member (9) which is connected to said moving member (3), preferably by way of non-magnetic material.

12. Magnetic bearing device according to claim 11, **characterized in that** said magnetic guide (8) comprises a coil device with a pair of coil bodies (10) which extends in a plane (xy), where said stator (2) and said moving member (3) are arranged in a direction (z) perpendicular to this plane (xy) above said pair of coil bodies (10) and said guide moving member (9) is arranged between said moving member (3) and said pair of coil bodies (10), where said guide moving member (9) comprises permanent magnets which are preferably arranged in the configuration of a Halbach array.

13. Positioning system (11), comprising at least a magnetic bearing device (1) according to one of the claims 1 to 12, a casing (12), and a platform (13), where said stator (2) is coupled to said casing (12) and said platform (13) is coupled to said moving member (3).

14. Positioning system according to claim 13, furthermore comprising a linear motor (14) which is configured to move said platform (13) relative to said casing (12) in said direction of motion (x).

## Revendications

1. Dispositif de palier magnétique (1), comprenant un stator (2) et un rotor (3) constitués d'au moins un dispositif à bobines (4) comprenant plusieurs corps de bobine (4-1), aimants (5) et/ou pièces de guidage de flux (6a à 6c, 7), dans lequel le rotor (3) est mobile par rapport au stator (2) le long d'au moins une direction de déplacement linéaire (x) et le stator (2) et le rotor (3) sont configurés de sorte qu'une force magnétique peut être exercée sur le rotor (3) lors de l'alimentation du dispositif à bobines (4) en énergie électrique, afin de créer un entrefer entre le stator (2) et le rotor (3), dans lequel le dispositif à bobines (4) est agencé exclusivement dans le stator (2) et l'extension du rotor (3) dans la direction de déplacement (x) est inférieure à l'extension du stator (2) dans ladite direction, dans lequel l'extension du stator (2) dans la direction de déplacement (x) correspond à la longueur des corps de bobine (4-1), dans lequel le dispositif à bobines (4) présente des corps de bobine (4-1) superposés dans une direction perpendiculaire à la direction de déplacement (x), **caractérisé en ce que** le stator présente les aimants (5), dans lequel les aimants (5) sont agencés entre les corps de bobine (4-1) dans un plan (xy) perpendiculaire à la direction d'action de la force magnétique.

2. Dispositif de palier magnétique selon la revendication 1, **caractérisé en ce que** l'extension du rotor (3) dans la direction de déplacement (x) est inférieure à 3/4, de manière préférée inférieure à 1/2, de manière préférée inférieure à 1/3, de manière particulièrement préférée inférieure ou égale à 1/4, de l'extension du stator (2) dans ladite direction.

3. Dispositif de palier magnétique selon la revendication 1 ou 2, **caractérisé en ce que** le rotor (3) comprend au moins deux pièces de guidage de flux (7) qui sont agencées sur des côtés opposés du stator (2) et qui sont reliées entre elles par un élément au moins partiellement non magnétique.

4. Dispositif de palier magnétique selon l'une quelconque des revendications précédentes, **caractérisé en ce que** chaque corps de bobine (4-1) s'étend dans un plan (xy) propre, dans lequel la longueur des aimants (5) et des pièces de guidage de flux (6) du stator dans la direction de déplacement (x) correspond de manière préférée à la longueur des sections s'étendant parallèlement de chaque corps de bobine (4-1).

5. Dispositif de palier magnétique selon l'une quelconque des revendications précédentes, **caractérisé en ce que** les aimants (5) sont agencés dans le stator (2) respectivement entre deux pièces de guidage de flux (6a à 6c).

6. Dispositif de palier magnétique selon l'une quelconque des revendications précédentes, **caractérisé en ce que** chaque corps de bobine (4-1) présente une ouverture et **en ce qu'**une pièce de guidage de flux (6a) est agencée dans l'ouverture de chaque corps de bobine (4-1).

7. Dispositif de palier magnétique selon l'une quelconque des revendications précédentes, **caractérisé en ce que** chaque corps de bobine (4-1) est agencé entre deux pièces de guidage de flux (6b, 6c) parallèles qui s'étendent de manière préférée dans la direction de déplacement (x), et **en ce que** de manière préférée au moins une des dites pièces de guidage de flux (6c) présente une section de couplage au niveau de laquelle elle peut être couplée à une autre structure, de manière préférée à un boîtier (12).

8. Dispositif de palier magnétique selon l'une quelconque des revendications précédentes, **caractérisé en ce que** le stator (2) présente une pièce de guidage de flux (6a) centrale comprenant une section transversale en forme de croix dans un plan perpendiculaire à la direction de déplacement (x) et **en ce que** des sections opposées de la pièce de guidage de flux (6a) centrale sont agencées dans les ouvertures de différents corps de bobine (4-1).

9. Dispositif de palier magnétique selon l'une quelconque des revendications précédentes, **caractérisé en ce que** les aimants (5) et/ou les pièces de guidage de flux (6a à 6c, 7) sont réalisé(e)s d'une seule pièce ou de manière segmentée.

10. Dispositif de palier magnétique selon l'une quelconque des revendications précédentes, **caractérisé en ce que** le dispositif de palier magnétique (1) comprend un guide magnétique (8) qui est configuré pour déplacer le rotor (3) dans un plan (xy) perpendiculaire à la force magnétique et dans une direction (y) perpendiculaire à la direction de déplacement (x).

11. Dispositif de palier magnétique selon la revendication 10, **caractérisé en ce que** le guide magnétique (8) comprend un rotor de guidage (9) qui est relié au rotor (3) de manière préférée par l'intermédiaire d'un matériau non magnétique.

12. Dispositif de palier magnétique selon la revendication 11, **caractérisé en ce que** le guide magnétique (8) présente un dispositif à bobines comprenant une paire de corps de bobine (10) qui s'étend dans un plan (xy), dans lequel le stator (2) et le rotor (3) sont agencés au-dessus de la paire de corps de bobine (10) dans une direction (z) perpendiculaire audit plan (xy) et le rotor de guidage (9) est agencé entre le rotor (3) et la paire de corps de bobine (10), dans lequel le rotor de guidage (9) présente des aimants permanents qui sont agencés de manière préférée en configuration de réseau de Halbach.

13. Système de positionnement (11), comprenant au moins un dispositif de palier magnétique (1) selon l'une quelconque des revendications 1 à 12, un boîtier (12) et une plate-forme (13), dans lequel le stator (2) est couplé au boîtier (12) et la plate-forme (13) est couplée au rotor (3).

14. Système de positionnement selon la revendication 13, comprenant en outre un moteur linéaire (14) configuré pour déplacer la plate-forme (13) par rapport au boîtier (12) dans la direction de déplacement (x).
